(19) Europäisches Patentamt
European Patent Office
Office européen des brevets

(11) **EP 2 596 063 B1**

(12) **EUROPÄISCHE PATENTSCHRIFT**

(45) Veröffentlichungstag und Bekanntmachung des Hinweises auf die Patenterteilung:
**20.05.2015 Patentblatt 2015/21**

(51) Int Cl.:
*C08L 53/02* (2006.01)   *E04D 3/32* (2006.01)
*C08K 7/02* (2006.01)   *F16J 15/00* (2006.01)
*D06M 15/21* (2006.01)

(21) Anmeldenummer: **11736063.6**

(22) Anmeldetag: **19.07.2011**

(86) Internationale Anmeldenummer:
**PCT/EP2011/062360**

(87) Internationale Veröffentlichungsnummer:
**WO 2012/010600 (26.01.2012 Gazette 2012/04)**

(54) **ZUSAMMENSETZUNG FÜR FLEXIBLE MEMBRANEN**

COMPOSITION FOR FLEXIBLE MEMBRANES

COMPOSITION POUR MEMBRANES FLEXIBLES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.07.2010 EP 10170307**

(43) Veröffentlichungstag der Anmeldung:
**29.05.2013 Patentblatt 2013/22**

(73) Patentinhaber: **Sika Technology AG**
**6340 Baar (CH)**

(72) Erfinder:
• **JENDOUBI, Elyes**
**CH-8052 Zürich (CH)**

• **DJAMSHIDIAN, Ramin**
**CH-8050 Zürich (CH)**

(74) Vertreter: **Sika Patent Attorneys**
**c/o Sika Technology AG**
**Corp. IP Dept.**
**Tüffenwies 16**
**Postfach**
**8048 Zürich (CH)**

(56) Entgegenhaltungen:
**DE-A1- 1 795 547   DE-U1-202004 015 936**
**US-A- 4 659 754   US-A1- 2002 081 924**
**US-A1- 2010 130 670**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

**Technisches Gebiet**

Die Erfindung geht aus von einer Zusammensetzung, insbesondere geeignet für die Herstellung von Dachmembranen, nach dem ersten Anspruch.

Die Erfindung geht weiter aus von einem Formkörper erhalten durch Extrudieren und/oder Kalandrieren einer solchen Zusammensetzung sowie einem Verfahren zur Herstellung eines Formkörpers.

**Stand der Technik**

Zur Abdichtung von Untergründen gegen Wasserdurchstoss sind in der Baubranche Abdichtungsmembranen, welche nachwachsende Rohstoffe enthalten, bekannt. Für solche Abdichtungen werden Zusammensetzungen benötigt, die flexibel sind, sich durch mechanische Festigkeit auszeichnen und eine geringe Wasseraufnahme aufweisen. Weiter sollten solche Zusammensetzungen vorzugsweise mittels Extrusion oder Spritzgiessen verarbeitbar sein.

Weiter offenbart US 2002081924 eine wasserdichte Dachmembran aufweisend eine Verstärkungsmatte mit feuerbeständigen Fasern sowie selbstklebendem Bitumen. In DE 1795547 werden Bodenplatten- und Schuhsohlenzusammensetzungen offenbart, welche als Bestandteile ein Blockcopolymerisat bestehend aus a) einem Mischpolymerisat aus Butadien-(1,3) und Styrol sowie b) einem Styrol-homopolymerisatblock und einem gebräuchlichem Füllstoffmaterial enthalten. DE 202004015936 U1 zeigt eine Polymerbitumenmasse, umfassend Bitumen, mindestens ein Polymer und mindestens ein tierisches und/oder pflanzliches Öl oder Fett oder ein Derivat oder ein Gemisch davon, wobei der Erweichungspunkt der Polymerbitumenmasse mindestens 85 °C beträgt. US4659754 beschreibt eine weichgemachte Faserzusammensetzung zur Verstärkung von Polymeren. US 2010130670 zeigt Zusammensetzungen hergestellt aus Hybrid-Blockcopolymeren und ihre Verwendung.

**Darstellung der Erfindung**

Aufgabe der vorliegenden Erfindung ist es daher, eine Zusammensetzung der eingangs genannten Art zur Verfügung zu stellen.

Erfindungsgemäss wird dies durch die Merkmale des ersten Anspruches erreicht.

Kern der Erfindung ist es also, dass die Zusammensetzung:

a) 20 - 90 Gew.-% Styrol-Blockcopolymer **SB** ausgewählt aus der Gruppe bestehend aus Styrol/Isopren-Block-Copolymer (SIS), Styrol/Ethylen-Butylen/Styrol-Block-Copolymer (SEBS), Styrol/Ethylen-Propylen/Styrol-Block-Copolymer (SEPS) und Styrol/Ethylen-Propylen-Block-Copolymer (SEP);
b) 0.08 - 10 Gew.-% polar modifiziertes Styrol-Blockcopolymer **PS;**
c) 1 - 50 Gew.-% Pflanzenfasern **PF;** und
d) 0.05 - 20 Gew.-% bei 25°C festes Polyolefin **P**

umfasst.

Die Vorteile der Erfindung sind unter anderem darin zu sehen, dass die Zusammensetzung sich durch hohe Festigkeit und Elastizität auszeichnen. Weiter erlaubt die Zusammensetzung eine kostengünstige und ökologische Herstellung und zeigt eine überraschend geringe Wasseraufnahme.

Es ist für die Verarbeitbarkeit und die mechanischen Eigenschaften, insbesondere der Elastizität, der Zusammensetzung besonders zweckmässig, wenn die Zusammensetzung weiter

e) 4 - 45 Gew.-% von:

Weichharz **WH** mit einem Erweichungspunkt, gemessen nach der Ring & Kugel-Methode gemäss DIN EN 1238, zwischen -10°C und 40°C
und/oder
Mineralöl **ML,** insbesondere naphthenisches Mineralöl, aufweist.

Es ist für die Festigkeit der Zusammensetzung besonders zweckmässig, wenn die Pflanzenfasern **PF** ein Verhältnis der Länge der Pflanzenfaser zum Durchmesser der Pflanzenfaser von 3:1 - 20:1 aufweisen. Weiter erlaubt ein solches Verhältnis eine leichtere Einarbeitung der Pflanzenfasern **PF** in die Zusammensetzung.

Es ist weiter für eine geringe Wasseraufnahme und die Festigkeit der Zusammensetzung von Vorteil, wenn das Verhältnis der Gewichts-%, bezogen auf die Zusammensetzung, von polar modifiziertem Styrol-Blockcopolymer **PS** : Pflanzenfasern **PF** von 0.01 - 0.5 beträgt.

Weitere Aspekte der Erfindung sind Gegenstand weiterer unabhängiger Ansprüche. Besonders bevorzugte Ausführungsformen der Erfindung sind Gegenstand der abhängigen Ansprüche.

**Weg zur Ausführung der Erfindung**

In einem ersten Aspekt betrifft die vorliegende Erfindung eine Zusammensetzung umfassend:

a) 20 - 90 Gew.-% Styrol-Blockcopolymer **SB** ausgewählt aus der Gruppe bestehend aus Styrol/Isopren-Block-Copolymer (SIS), Styrol/Ethylen-Butylen/Styrol-Block-Copolymer (SEBS), Styrol/Ethylen-Propylen/Styrol-Block-Copolymer (SEPS) und und Styrol/Ethylen-Propylen-Block-Copolymer (SEP);
b) 0.08 - 10 Gew.-% polar modifiziertes Styrol-Blockcopolymer **PS;**
c) 1 - 50 Gew.-% Pflanzenfasern **PF;**
d) 0.05 - 20 Gew.-% bei 25°C festes Polyolefin **P.**

Bei dem Styrol-Blockcopolymer **SB** handelt es sich vorzugsweise um Styrol/Ethylen-Butylen/Styrol-Block-Copolymer (SEBS).

Bevorzugt weist das Styrol-Blockcopolymer **SB** eine Bruchdehnung von $\geq$ 200 %, vorzugsweise von $\geq$ 300 %, auf und eine Zugfestigkeit von $\geq$ 10 MPa, vorzugsweise von $\geq$ 20 MPa, beide gemessen gemäss DIN EN ISO 527.

Bei dem Polyolefin **P** handelt es sich vorzugsweise um ein Polyolefin **P,** welches einen Erweichungspunkt, gemessen nach der Ring & Kugel-Methode gemäss DIN EN 1238, zwischen 70°C und 170°C, insbesondere zwischen 80°C und 120°C, bevorzugt zwischen 90°C und 110°C, aufweist.

Als Erweichungspunkt wird im vorliegenden Dokument jeweils der Erweichungspunkt, welcher nach der Ring & Kugel-Methode gemäss DIN EN 1238 gemessen wurde, verstanden.

Typischerweise ist das Polyolefin **P** ein thermoplastisches Poly-$\alpha$-olefin, bevorzugt ein ataktisches Poly-$\alpha$-olefin (APAO).

Diese ataktischen Poly-$\alpha$-olefine lassen sich durch Polymerisation von $\alpha$-Olefinen, insbesondere von Ethen, Propen und 1-Buten, beispielsweise mit Ziegler-Katalysatoren herstellen. Es lassen sich Homopolymere oder Copolymere von $\alpha$-Olefinen herstellen. Sie weisen gegenüber anderen Polyolefinen eine amorphe Struktur auf.

Unter einem "$\alpha$-Olefin" wird in diesem Dokument in üblicher Definition ein Alken der Summenformel $C_xH_{2x}$ (x entspricht der Anzahl Kohlenstoffatome) verstanden, welches eine C-C-Doppelbindung am ersten Kohlenstoffatom ($\alpha$-Kohlenstoff) aufweist. Beispiele für $\alpha$-Olefine sind Ethylen, Propylen, 1-Buten, 1-Penten, 1-Hexen, 1-Hepten und 1-Octen.

Vorteilhafterweise beträgt die Menge an Polyolefin **P** 1 - 12 Gew.-%, bevorzugt 5 - 10 Gew.-%, bezogen auf die Zusammensetzung, dies ist in Bezug auf das Bruchdehnungsverhalten der Zusammensetzung vorteilhaft.

Das Molekulargewicht $M_n$ des Polyolefin **P** beträgt insbesondere zwischen 7'000 und 25'000 g/mol.

Der Begriff "Polymer" umfasst im vorliegenden Dokument einerseits ein Kollektiv von chemisch einheitlichen, sich aber in Bezug auf Polymerisationsgrad, Molmasse und Kettenlänge unterscheidenden Makromolekülen, das durch eine Polyreaktion (Polymerisation, Polyaddition, Polykondensation) hergestellt wurde. Der Begriff umfasst andererseits auch Derivate eines solchen Kollektivs von Makromolekülen aus Polyreaktionen, Verbindungen also, die durch Umsetzungen, wie beispielsweise Additionen oder Substitutionen, von funktionellen Gruppen an vorgegebenen Makromolekülen erhalten wurden und die chemisch einheitlich oder chemisch uneinheitlich sein können. Der Begriff umfasst weiterhin auch so genannte Prepolymere, das heisst reaktive oligomere Voraddukte, deren funktionelle Gruppen am Aufbau von Makromolekülen beteiligt sind.

Unter "Molekulargewicht" versteht man im vorliegenden Dokument stets das Molekulargewichtsmittel $M_n$ (Zahlenmittel).

Als "Raumtemperatur" wird im vorliegenden Dokument eine Temperatur von 23°C bezeichnet.

Die fett markierten Bezeichnungen wie **P, SB, PS, PF, WH, ML** und dergleichen im vorliegenden Dokument dienen lediglich für das bessere Leseverständnis und Identifizierung.

Die Zusammensetzung enthält weiterhin 0.08 - 10 Gew.-% polar modifiziertes Styrol-Blockcopolymer **PS.**

Geeignete polar modifiziertes Styrol-Blockcopolymer **PS** entstehen durch Aufpfropfung von polaren Olefinmonomeren, beispielsweise $\alpha,\beta$-ungesättigter Carbonsäuren und/oder deren Derivaten, etwa (Meth-)acrylsäure oder Maleinsäureanhydrid; auf Styrol-Blockcopolymere.

Bevorzugt handelt es sich bei dem polar modifizierten Styrol-Blockcopolymer **PS** um ein Maleinsäureanhydrid gepfropftes Styrol-Blockcopolymer.

Geeignete Styrol-Blockcopolymere als Grundlage zur Herstellung von polar modifizierten Styrol-Blockcopolymer **PS** sind ausgewählt aus der Gruppe bestehend aus Styrol/Isopren-Block-Copolymer (SIS), Styrol/Ethylen-Butylen/Styrol-Block-Copolymer (SEBS), Styrol/Ethylen-Propylen/Styrol-Block-Copolymer (SEPS) und Styrol/Ethylen-Propylen-Block-Copolymer (SEP), vorzugsweise handelt es sich um Styrol/Ethylen-Butylen/Styrol-Block-Copolymer (SEBS).

Besonders bevorzugt handelt es sich bei dem polar modifizierten Polyolefinwachs **PS** um ein Maleinsäureanhydrid gepfropftes Styrol/Ethylen-Butylen/Styrol-Block-Copolymer (SEBS).

Der Pfropfungsgrad des polar modifizierten Styrol-Blockcopolymer **PS** ist vorteilhaft über 1 Gew.-%, insbesondere über 1.4 Gew.-%, polarer Olefinmonomere, insbesondere Maleinsäureanhydrid, bezogen auf das Gewicht des Styrol-Blockcopolymer. Vorzugsweise beträgt dieser Pfropfungsgrad zwischen 1.4 und 10 Gew.-%.

Die Menge an polar modifiziertem Styrol-Blockcopolymer **PS** beträgt vorzugsweise 0.5 - 5 Gew.-%, bevorzugt 1- 2.5 Gew.-%, insbesondere bevorzugt 1.5 - 2.5 Gew.-%, bezogen auf die Zusammensetzung.

Es wurde überraschenderweise gefunden, dass das polar modifizierte Styrol-Blockcopolymer **PS,** insbesondere im Vergleich zu anderen Compatibilisatoren, auch Verträglichkeitsvermittler genannt, wie beispielsweise Polyvinylbutyral, Ethylen-Butylacrylat/glycid-methacrylat Copolymeren oder Vinylacetat-Ethylen-Copolymeren, wesentlich zur Verbesserungen der mechanischen und physikalischen Eigenschaften der Zusammensetzung beiträgt.

Die Zusammensetzung enthält weiterhin 1 - 50 Gew.-% Pflanzenfasern **PF.**

Unter dem Begriff "Pflanzenfaser" wird im vorliegenden Dokument ein linienförmiges, im Verhältnis zur Länge dünnes und flexibles Gebilde pflanzlichen Ursprungs verstanden.

Sie werden typischerweise von Pflanzenteilen gewonnen, beispielsweise von Samenfasern wie Baumwolle, Fruchtwandfasern wie Kapok, Bastfasern wie Flachs, Hanf, Jute oder Hartfasern wie Sisal und Kokos.

Vorzugsweise weisen die Pflanzenfasern **PF** einen Celluloseanteil von mehr als 30 Gew.-%, insbesondere mehr als 40 Gew.-%, bezogen auf das Gesamtgewicht der Pflanzenfasern **PF,** auf. Dies ist insbesondere für die Wasserbeständigkeit der Zusammensetzung vorteilhaft.

Vorzugsweise handelt es sich bei den Pflanzenfasern **PF** um Holzfasern.

Unter dem Begriff "Holzfaser" wird im vorliegenden Dokument das wesentliche Strukturelement von Holz verstanden, welches bei der Holz-Verarbeitung gewonnen wird, sowohl beim mechanischen als auch beim chemischen Aufschluss. Die Holzfasern enthalten neben der Cellulose noch Lignin und andere Verunreinigungen.

Holzfasern können durch ihre Länge charakterisiert werden. Die Nadelholzfasern sind länger als die Laubholzfasern, typische Werte sind 3,5-6 mm für Fichten-, Kiefer- oder Tannenfasern und 1-1,5 mm für Pappel-, Birkeoder Buchenfasern. Bevorzugt sind Längen von 500 - 50 $\mu$m, 300 - 100 $\mu$m, bevorzugt sind weiter Nadelholzfasern.

Es ist vorteilhaft, wenn die Pflanzenfasern **PF** ein Verhältnis der Länge der Pflanzenfaser zum Durchmesser der Pflanzenfaser von 3:1 - 20:1, insbesondere 5:1 - 10:1, aufweisen, weil ein solches Verhältnis eine leichtere Einarbeitung der Pflanzenfasern **PF** in die Zusammensetzung erlaubt. Ferner wirkt sich ein solches Verhältnis vorteilhaft auf die Härte der Zusammensetzung aus.

Vorzugsweise weist die Zusammensetzung weiter

e) 4 - 45 Gew.-% von:

Weichharz **WH** mit einem Erweichungspunkt, gemessen nach der Ring & Kugel-Methode gemäss DIN EN 1238, zwischen -10°C und 40°C
und/oder
Mineralöl **ML,** insbesondere naphthenisches Mineralöl,

auf.

Aufgrund der Tatsache, dass sich das Weichharz **WH** bei Raumtemperatur (23°C) sehr nahe am Erweichungspunkt befindet, ist es bei Raumtemperatur entweder bereits flüssig oder sehr weich. Ein Weichharz kann ein natürliches Harz oder synthetisches Harz sein.

Insbesondere sind derartige Weichharze **WH** mittel- bis höhermolekulare Verbindungen aus den Klassen der Parafin-, Kohlenwasserstoffharze, Polyolefine, Polyester, Polyether, Polyacrylate oder Aminoharze.

Das Weichharz **WH** weist vorzugsweise einen Erweichungspunkt zwischen 0°C und 25°C, insbesondere zwischen 10°C und 25°C, auf.

In einer bevorzugten Ausführungsform ist das Weichharz **WH** ein Kohlenwasserstoffharz, insbesondere ein aliphatisches $C_5$-$C_9$-Kohlenwasserstoffharz.

Besonders geeignet als Weichharz **WH** hat sich ein aliphatisches $C_5$-Kohlenwasserstoffharz gezeigt, welches unter dem Handelsnamen Wingtack® 10 von der Firma Cray Valley kommerziell vertrieben wird.

Weitere geeignete Weichharze sind beispielsweise Polyterpenharze, wie sie beispielsweise als Sylvares® TR A25 von Arizona Chemical, USA, kommerziell vertrieben werden, Rosinester und Tallharzester, wie sie beispielsweise als Sylvatac® RE 12, Sylvatac® RE 10, Sylvatac® RE 15, Sylvatac® RE 20, Sylvatac® RE 25 oder Sylvatac® RE 40 von Arizona Chemical, USA, kommerziell vertrieben werden.

Weitere geeignete Weichharze sind beispielsweise Escorez™ 5040 (Exxon Mobil Chemical).

Als Weichharze weiter geeignete Kohlenwasserstoffharze sind beispielsweise Picco A10 (Eastman Kodak) und Regalite R1010 (Eastman Kodak).

Die Menge an Weichharze **WH** beträgt vorzugsweise 10 - 40 Gew.-%, insbesondere 20 - 30 Gew.-%, bezogen auf die Zusammensetzung.

Unter dem Begriff "Mineralöl" werden im vorliegenden Dokument flüssigen Destillationsprodukte, welche aus mineralischen Rohstoffen wie Erdöl, Braun- und Steinkohlen, Holz und Torf gewonnen werden, verstanden, die im wesentlichen aus Gemischen von gesättigten Kohlenwasserstoffen bestehen. Mineralöle **ML** sind aus Kostengründen bevorzugt.

Als Mineralöl **ML** bevorzugt ist naphthenisches Mineralöl, wegen der guten Kompatibilität mit der Zusammensetzung.

Bevorzugte Mineralöle sind beispielsweise unter dem Namen Shell Ondina 917 und 933 bei Shell Deutschland Oil GmbH, Deuschland, kommerziell erhältlich.

Die Menge an Mineralöl **ML** beträgt vorzugsweise 10 - 40 Gew.-%, insbesondere 20 - 30 Gew.-%, bezogen auf die Zusammensetzung.

Gegenüber einem zusätzlichen Anteil e) 4 - 45 Gew.-% von Weichharz **WH** oder einem zusätzlichen Anteil e) 4 - 45 Gew.-% von Weichharz **WH** und Mineralöl **ML** ist ein zusätzlichen Anteil e) 4 - 45 Gew.-% von Mineralöl **ML** bevorzugt.

In einer bevorzugten Ausführungsform weist die Zusammensetzung ein Verhältnis der Gewichts-%, bezogen auf die Zusammensetzung, von polar modifiziertem Styrol-Blockcopolymer **PS :** Pflanzenfasern **PF** von 0.01 - 0.5, insbesondere von 0.05 - 0.1, auf. Dies ist dahingehend von Vorteil, weil sich dadurch die Wasseraufnahme der Zusammensetzung verringert und die Zugfestigkeit, das E-Modul, die Bruchdehnung sowie die Härte erhöht.

Weiterhin kann die Zusammensetzung weitere Bestandteile aufweisen. Als weitere Bestandteile geeignet sind insbesondere Bestandteile, welche ausgewählt sind aus der Gruppe umfassend Weichmacher, Haftvermittler, UV-Absorptionsmittel, UV- und Wärmestabilisatoren, optische Aufheller, Fungizide, Pigmente, Farbstoffe, Füllstoffe und Trocknungsmittel.

Als besonders vorteilhaft haben sich Zusammensetzungen erwiesen, welche im Wesentlichen aus Styrol-Blockcopolymer **SB,** polar modifiziertes Styrol-Blockcopolymer **PS,** Pflanzenfasern **PF,** bei 25°C festem Polyolefin **P** und gegebenenfalls Weichharz **WH** mit einem Erweichungspunkt, gemessen nach der Ring & Kugel-Methode gemäss DIN EN 1238, zwischen -10°C und 40°C und/oder Mineralöl **ML** bestehen. Derartige Zusammensetzungen weisen neben diesen Bestandteilen nur unwesentliche, typischerweise weniger als 5 Gew.-%, insbesondere weniger als 1 Gew.-%, Anteile an anderen Bestandteilen auf.

Insbesondere besteht die Zusammensetzung aus Styrol-Blockcopolymer **SB,** polar modifiziertes Styrol-Blockcopolymer **PS,** Pflanzenfasern **PF,** bei 25°C festem Polyolefin **P** und gegebenenfalls Weichharz **WH** mit einem Erweichungspunkt, gemessen nach der Ring & Kugel-Methode gemäss DIN EN 1238, zwischen -10°C und 40°C und/oder Mineralöl **ML**

Besonders bevorzugte Zusammensetzungen sind beispielsweise:

| Verwendete Rohstoffe (in Gew-%) | | | |
|---|---|---|---|
| **SB** | 47.1 | 42.7 | 37.5 |
| **ML** | 28.3 | 25.6 | 22.5 |
| **P** | 9.4 | 8.6 | 7.5 |
| **PS** | 1.1 | 1.7 | 2.5 |
| **PF** | 14.1 | 21.4 | 37.5 |
| Summe | 100 | 100 | 100 |
| Verhältnis **PS : PF** | 0.08 | 0.08 | 0.08 |

Des Weiteren umfasst die Erfindung ein Verfahren zur Herstellung eines Formkörpers, umfassend die Schritte

I) Herstellen einer Zusammensetzung wie sie vorgehend beschrieben wurde;
II) Formen der Zusammensetzung zu einem Formkörper.

Grundsätzlich erfolgt die Herstellung in Schritt I) auf übliche, dem Fachmann für Kunststoffe bekannte, Art und Weise.

Vorzugsweise werden in Schritt I) zuerst **SB, ML** und **P** miteinander gemischt. Danach wird **PS** zugegeben und gemischt und anschliessend wird **PF** zugegeben und wieder gemischt. Vorzugsweise findet der Schritt I) bei einer Temperatur von 150 - 200 °C statt, vorzugsweise in einem Extruder oder Kalander.

Vorzugsweise handelt es sich in Schritt II) bei dem Formen um Extrudieren und/oder Kalandrieren, typischerweise auf handelsüblichen Maschinen. Vorzugsweise handelt es sich bei dem Formkörper um eine Membran, insbesondere um eine Dachmembran, respektive Dachbahn. Eine solche Membran kann in einem einzigen Verfahrensschritt als Endlosware, beispielsweise durch Extrusion und/oder Kalandrieren und/oder Kaschieren, hergestellt werden und beispielsweise auf Rollen aufgerollt werden. Die Massetemperatur im Extruder oder Kalander kann in einem Bereich von 100°C - 200°C, bevorzugt 120°C - 170°C, liegen, bevorzugt während der Extrusion und/oder dem Kalandrieren und/oder dem Kaschieren.

Des Weiteren umfasst die Erfindung einen Formkörper erhalten durch Extrudieren und/oder Kalandrieren einer Zusammensetzung wie sie vorgehend beschrieben wurde. Vorzugsweise handelt es sich bei dem Formkörper um eine Membran, insbesondere um eine Dachmembran. Eine solche Membran hat vorzugsweise eine Dicke von 1 - 2.5 mm.

Solche Membranen gewährleisten eine ausreichende Dichtheit bei Kontakt mit Wasser. Weiter zeigen sie gute Werte bezüglich Flexibilität und mechanische Festigkeit, was besonders bei mechanischen Belastungen auf Baustellen von Vorteil ist. Ferner verfügen sie über eine gute Elastizität gegenüber Horizontal- und Vertikalverschiebungen. Zusätzlich erlaubt die Zusammensetzung eine kostengünstige und aufgrund der Verwendung des nachwachsenden Rohstoffs Pflanzenfasern eine ökologische Herstellung. Des Weiteren weist die Membran eine Flexibilität auf, welche ein Aufrollen der Membran erlaubt, was den Transport sowie ein Aufbringen der Membran auf einem Untergrund erleichtert.

Die vorgängig beschriebenen Formkörper können vielseitig eingesetzt werden, typischerweise in der Bauindustrie.

Des Weiteren umfasst die Erfindung die Verwendung eines Formkörpers, insbesondere einer Membran, wie er vorhergehend erwähnt wurde, zur Abdichtung von Untergründen, insbesondere zur Abdichtung von Dächern.

**Beispiele**

Tabelle 1. Charakterisierung der verwendeten Rohstoffe und deren Bezeichnung

| | |
|---|---|
| **SB** | Kreaton® G1652M Polymer, Kraton Polymers GmbH, Deutschland<br>Styrol/Ethylen-Butylen/Styrol-Block-Copolymer (SEBS) |
| **P** | Domolen® 1101 N, DOMO Polypropylene b.v., Niederlande<br>Poly-α-olefin, Polypropylen-Homopolymer<br>Schmelztemperatur (10°C/min, ISO 11357-1/-3) ca. 160°C |
| **ML** | Shell Ondina 933, Shell Deutschland Oil GmbH, Deutschland naphthenisches Mineralöl |
| **PS** | Kreaton® FG1901 G Polymer, Kraton Polymers GmbH, Deutschland<br>Maleinsäureanhydrid-gepfropftes SEBS<br>Pfropfungsgrad: 1.4 - 2 Gew.-% |
| **PF** | JELUXYL®WEHO 500 S, JELU-Werk J. Ehrler GmbH, Deutschland<br>Holzfasern, Verhältnis der Länge der Pflanzenfaser zum Durchmesser der Pflanzenfaser von 6:1 - 7:1 |
| **PVB** | BUTVAR B-98, Solutia, USA<br>Polyvinylbutyral |
| **EBG** | Elvaloy®PTW, DuPont S.A., Schweiz<br>Ethylen-Butylacrylat/glycid-methacrylat Copolymer |
| **EVA** | VINNEX® LL 2504, WACKER Chemie AG, Deutschland<br>Vinylacetat-Ethyfen-Copolymer |

Es wurden Vergleichszusammensetzungen **("VZ") VZ1 -** VZ4 und erfindungsgemässe Zusammensetzung ("Z") **Z1 - Z4** hergestellt, indem die Inhaltsstoffe gemäss den in Tabelle 2 oder 3 angegebenen Gewichtsteilen miteinander vermengt wurden.

**SB, ML** und **P** wurden in einer Walzwerkmaschine der Firma Dr. Collin GmbH, Deutschland mit der Bezeichnung Prüfwalzwerk Modell W 150 bei einer Umdrehung von 20 U/min und 170°C verarbeitet.

Nach dem Homogenisieren wurde den erfindungsgemässen Zusammensetzungen **Z1 - Z4 PS,** respektive den Vergleichszusammensetzungen **VZ2 PVB, VZ3 EBG** und **VZ4 EVA** zugegeben und für 2 min weiter homogenisiert. Danach wurde den erfindungsgemässen Zusammensetzungen **Z1 - Z4,** respektive den Vergleichszusammensetzungen **VZ1 - VZ4, PF** zugegeben und die Mischung bei derselben Temperatur für weitere 2 min homogenisiert.

Danach wurden die erfindungsgemässen Zusammensetzungen, respektive die Vergleichszusammensetzungen, durch eine Heizpresse bei 160 °C und 60 bar in Form von Platten (300 x 200 x 2 mm) gepresst.

**E-Modul [MPa], Zugfestigkeit [MPa] und Bruchdehnung [%]**

Die Messwerte wurden gemäss DIN EN ISO 527 gemessen, bei einer Prüfgeschwindigkeit von 200 mm/min und einem Prüfklima von 23°C mit 50% relative Feuchtigkeit.

**Shore A Härte [-]**

Die Shore A Härte wurde nach DIN EN 59 gemessen.

**Wasseraufnahme bei 60°C nach 266, resp. 312 Stunden [%]**

Für die Wasseraufnahme bei 60°C nach 266, resp. 312 Stunden [%] wurden Prüfkörper von 40 x 40 x 2 mm hergestellt. Danach wurden die Prüfkörper für 24 Stunden bei 50°C gelagert, zum ersten Mal gewogen und anschliessend für 266 Stunden, resp. 312 Stunden, bei 60°C in Wasser gelagert. Danach wurden die Prüfkörper dem Wasser entnommen, anhaftendes Wasser mit einem trockenen Tuch abgewischt und die Probenkörper anschliessend zum zweiten Mal gewogen. Gemessen wurde die Massenänderung in [%] gemäss der Formel:

$$\text{Massenänderung [\%]} = [(\text{Gewicht nach Wasserlagerung (zweite Wägung)} - \text{Gewicht vor Wasserlagerung (erste Wägung)}) / \text{Gewicht vor Wasserlagerung (erste Wägung)}] * 100$$

Tabelle 2 Vergleichszusammensetzungen **VZ** und Resultate

| Zusammensetzungen | *VZ1* | *VZ2* | *VZ3* | *VZ4* |
|---|---|---|---|---|
| Verwendete Rohstoffe (in Gew-%) | | | | |
| *SB* | 43.5 | 42.7 | 42.7 | 42.7 |
| *ML* | 26.1 | 25.6 | 25.6 | 25.6 |
| *P* | 8.7 | 8.6 | 8.6 | 8.6 |
| *PS* | 0.0 | - | - | - |
| *Butvar* | - | 1.7 | - | - |
| *Elvaloy* | - | - | 1.7 | - |
| *Vinnex* | - | - | - | 1.7 |
| *PF* | 21.7 | 21.4 | 21.4 | 21.4 |
| Summe | 100 | 100 | 100 | 100 |
| Verhältnis *PS* : *PF* | 0 | 0 | 0 | 0 |
| Resultate | | | | |
| **E-Modul** [MPa] | 34.23 | 32.18 | 25.5 | 27.37 |
| **Zugfestigkeit [MPa]** | 2.85 | 2.89 | 2.39 | 2.59 |
| **Bruchdehnung[%]** | 118.94 | n.a. | n.a. | n.a. |
| **Shore A Härte [-]** | 68.4 | n.a. | n.a. | n.a. |

(fortgesetzt)

| Resultate | | | | |
|---|---|---|---|---|
| **Wasseraufnahme bei 60°C nach 266h [%]** | 6.691 | 7.453 | 6.157 | 12.577 |
| **Wasseraufnahme bei 60°C nach 312h [%]** | 6.691 | n.a. | n.a. | n.a. |

Tabelle 3 Erfindungsgemässe Zusammensetzungen **Z** und Resultate

| Zusammensetzungen | *Z1* | *Z2* | *Z3* | *Z4* |
|---|---|---|---|---|
| Verwendete Rohstoffe (in Gew-%) | | | | |
| *SB* | 43.1 | 42.7 | 41.7 | 40.0 |
| *ML* | 25.9 | 25.6 | 25.0 | 24.0 |
| *P* | 8.6 | 8.6 | 8.3 | 8.0 |
| *PS* | 0.8 | 1.7 | 4.2 | 8.0 |
| *PF* | 21.6 | 21.4 | 20.8 | 20.0 |
| Summe | 100 | 100 | 100 | 100 |
| Verhältnis *PS : PF* | 0.04 | 0.08 | 0.2 | 0.4 |
| Resultate | | | | |
| **E-Modul [MPa]** | 36.29 | 41.68 | 29.18 | 31.90 |
| **Zugfestigkeit [MPa]** | 3.98 | 4.23 | 3.73 | 4.06 |
| **Bruchdehnung [%]** | n.a. | 135.77 | 159.47 | n.a. |
| **Shore A Härte [-]** | n.a. | 78.3 | 75.5 | n.a. |
| **Wasseraufnahme bei 60°C nach 266h [%]** | n.a. | 5.107 | n.a. | n.a. |
| **Wasseraufnahme bei 60°C nach 312h [%]** | n.a. | 5.732 | 6.207 | n.a. |

Aus den Resultaten ist ersichtlich, dass sich die erfindungsgemässen Zusammensetzungen gegenüber der Vergleichszusammensetzung *VZ1* durch eine geringere Wasseraufnahme, eine höhere Zugfestigkeit und Shore A Härte auszeichnen. Insbesondere die Zusammensetzung *Z2,* welche ein Verhältnis *PS : PF* von 0.08 aufweist, zeigt besonders vorteilhafte Werte bei der Wasseraufnahme bei 60°C nach 266h, respektive 312h und bei der Shore A Härte.

Weiter ist aus den Resultaten ist ersichtlich, dass sich die erfindungsgemässe Zusammensetzung *Z2* mit 1.7 Gew.-% *PS* gegenüber den Vergleichszusammensetzung *VZ2 - VZ4,* welche 1.7 Gew,-% der Compatibilisatoren *PVB, EBG,* respektive *EVA* aufweisen, durch eine geringere Wasseraufnahme bei 60°C nach 266h, eine höhere Zugfestigkeit und ein höheres E-Modul auszeichnet.

Selbstverständlich ist die Erfindung nicht auf das gezeigte und beschriebene Ausführungsbeispiel beschränkt.

**Patentansprüche**

1.  Zusammensetzung umfassend:

     a) 20 - 90 Gew.-% Styrol-Blockcopolymer **SB** ausgewählt aus der Gruppe bestehend aus Styrol/Isopren-Block-Copolymer (SIS), Styrol/Ethylen-Butylen/Styrol-Block-Copolymer (SEBS), Styrol/Ethylen-Propylen/Styrol-Block-Copolymer (SEPS) und Styrol/Ethylen-Propylen-Block-Copolymer (SEP);
     b) 0.08 - 10 Gew.-% polar modifiziertes Styrol-Blockcopolymer **PS;**
     c) 1 - 50 Gew.-% Pflanzenfasern **PF;**
     d) 0.05 - 20 Gew.-% bei 25°C festes Polyolefin **P.**

2.  Zusammensetzung gemäss Anspruch 1, **dadurch gekennzeichnet, dass** die Zusammensetzung weiter

e) 4 - 45 Gew.-% von:

Weichharz **WH** mit einem Erweichungspunkt, gemessen nach der Ring & Kugel-Methode gemäss DIN EN 1238, zwischen -10°C und 40°C
und/oder
Mineralöl **ML,** insbesondere naphthenisches Mineralöl,
aufweist.

3.  Zusammensetzung gemäss Anspruch 2, **dadurch gekennzeichnet, dass** das Weichharz **WH** einen Erweichungspunkt zwischen 0°C und 25°C, insbesondere zwischen 10°C und 25°C, aufweist.

4.  Zusammensetzung gemäss Anspruch 2 oder 3, **dadurch gekennzeichnet, dass** das Weichharz **WH** ein Kohlenwasserstoffharz, insbesondere ein aliphatisches $C_5$-$C_9$-Kohlenwasserstoffharz, ist.

5.  Zusammensetzung gemäss Anspruch 2, **dadurch gekennzeichnet, dass** die Zusammensetzung weiter

e) 4 - 45 Gew.-% Mineralöl **ML,** insbesondere naphthenisches Mineralöl, aufweist.

6.  Zusammensetzung gemäss einem der vorhergehenden Ansprüche, **dadurch gekennzeichnet, dass** die Pflanzenfasern **PF** einen Celluloseanteil von mehr als 30 Gew.-%, insbesondere mehr als 40 Gew.-%, bezogen auf das Gesamtgewicht der Pflanzenfasern **PF,** aufweisen.

7.  Zusammensetzung gemäss einem der vorhergehenden Ansprüche, **dadurch gekennzeichnet, dass** die Pflanzenfasern **PF** ein Verhältnis der Länge der Pflanzenfaser zum Durchmesser der Pflanzenfaser von 3:1-20:1, insbesondere 5:1 - 10:1, aufweisen.

8.  Zusammensetzung gemäss einem der vorhergehenden Ansprüche, **dadurch gekennzeichnet, dass** das Polyolefin **P** einen Erweichungspunkt, gemessen nach der Ring & Kugel-Methode gemäss DIN EN 1238, zwischen 70°C und 170°C, insbesondere zwischen 80°C und 120°C, bevorzugt zwischen 90°C und 110°C, aufweist.

9.  Zusammensetzung gemäss einem der vorhergehenden Ansprüche, **dadurch gekennzeichnet, dass** das Polyolefin **P** ein thermoplastisches Poly-$\alpha$-olefin, bevorzugt ein ataktisches Poly-$\alpha$-olefin (APAO), ist.

10.  Zusammensetzung gemäss einem der vorhergehenden Ansprüche, **dadurch gekennzeichnet, dass** das Verhältnis der Gewichts-%, bezogen auf die Zusammensetzung, von polar modifiziertem Styrol-Blockcopolymer **PS :** Pflanzenfasern **PF** von 0.01 - 0.5, insbesondere von 0.05 - 0.1, beträgt.

11.  Verfahren zu Herstellung eines Formkörpers, umfassend die Schritte

I) Herstellen einer Zusammensetzung gemäss einem der Ansprüche 1 - 10;
II) Formen der Zusammensetzung, insbesondere Extrudieren und/oder Kalandrieren, zu einem Formkörper.

12.  Formkörper erhalten durch Extrudieren und/oder Kalandrieren einer Zusammensetzung gemäss einem der Ansprüche 1 - 10.

13.  Formkörper gemäss Anspruch 12 in Form einer Membran, insbesondere einer Dachmembran, mit einer Dicke von 1 - 2.5 mm.

14.  Verwendung eines Formkörpers gemäss einem der Ansprüche 12 oder 13, zur Abdichtung von Untergründen, insbesondere zur Abdichtung von Dächern.

**Claims**

1.  A composition comprising:

a) 20-90 wt.% styrene block copolymer **SB** selected from the group consisting of styrene/isoprene block copolymer (SIS),

styrene/ethylene-butylene/styrene block copolymer (SEBS),
styrene/ethylene-propylene/styrene block copolymer (SEPS) and
styrene/ethylene-propylene block copolymer (SEP);
b) 0.08-10 wt.% polar-modified styrene block copolymer **PS;**
c) 1-50- wt.% plant fibers **PF;**
d) 0.05-20 wt.% polyolefin **P** solid at 25°C.

2. The composition according to claim 1, wherein the composition additionally contains

   e) 4-45 wt.% of:

   soft resin **WH** with a softening point, measured by the ring and ball method according to DIN EN 1238, between -10°C and 40°C
   and/or
   mineral oil **ML,** especially naphthenic mineral oil.

3. The composition according to claim 2, wherein the soft resin **WH** has a softening point between 0°C and 25°C, especially between 10°C and 25°C.

4. The composition according to claim 2 or 3, wherein the soft resin **WH** is a hydrocarbon resin, in particular an aliphatic $C_5$-$C_9$ hydrocarbon resin.

5. The composition according to claim 2, wherein the composition additionally contains e) 4-45 wt.% of mineral oil **ML,** especially naphthenic mineral oil.

6. The composition according to one of the preceding claims, wherein the plant fibers **PF** have a cellulose fraction of more than 30 wt.%, especially more than 40 wt.%, based on the total weight of the plant fibers **PF.**

7. The composition according to one of the preceding claims, wherein the plant fibers **PF** have a ratio of the length of the plant fibers to the diameter of the plant fibers of 3:1-20:1, especially 5:1 to 10:1.

8. The composition according to one of the preceding claims, wherein the polyolefin **P** has a softening point, measured by the ring and ball method according to DIN EN 1238, of between 70°C and 170°C, especially between 80°C and 120°C, preferably between 90°C and 110°C.

9. The composition according to one of the preceding claims, wherein the polyolefin **P** is a thermoplastic poly-oc-olefin, preferably an atactic poly-a-olefin (APAO).

10. The composition according to one of the preceding claims, wherein the ratio of the wt.-%, based on the composition, of polar modified styrene block copolymer **PS:** plant fibers **PF** is from 0.01-0.5, especially from 0.05-0.1.

11. A method for producing a three-dimensional article, comprising the steps

    (I) Preparing a composition according to one of claims 1-10;
    (II) Forming the composition, especially by extrusion or calendering, into a three-dimensional article.

12. A three-dimensional article obtained by extrusion and/or calendering a composition according to one of claims 1-10.

13. The three-dimensional article according to claim 12 in the form of a membrane, especially a roofing membrane, with a thickness of 1-2.5 mm.

14. Use of a three-dimensional article according to one of claims 12 or 13 for waterproofing substrates, especially for waterproofing roofs.

**Revendications**

1. Composition comprenant :

a) 20 à 90 % en poids d'un copolymère à blocs de styrène **SB** choisi dans le groupe constitué de copolymère à blocs styrène/isoprène (SIS),
de copolymère à blocs styrène/éthylène-butylène/styrène (SEBS),
copolymère à blocs styrène/éthylène-propylène/styrène (SEPS) et
copolymère à blocs styrène/éthylène-propylène (SEP) ;
b) 0,08 à 10 % en poids de copolymère à blocs de styrène à polarisation modifiée **PS ;**
c) 1 à 50 % en poids de fibres de plante **PF;**
d) 0,05 à 20 % en poids de polyoléfine **P** solide à 25 °C.

2. Composition selon la revendication 1, dans laquelle la composition contient en outre

e) 4 à 45 % en poids de :

résine molle **WH** avec un point de ramollissement, mesuré selon la méthode bille et anneau conforme à DIN EN 1238, entre -10 °C et 40 °C
et/ou
huile minérale **ML,** en particulier de l'huile minérale naphténique.

3. Composition selon la revendication 2, dans laquelle la résine molle **WH** a un point de ramollissement compris entre 0 et 25 °C, en particulier entre 10 et 25 °C.

4. Composition selon la revendication 2 ou 3, dans laquelle la résine molle **WH** est une résine hydrocarbure, en particulier une résine hydrocarbure aliphatique en $C_5$-$C_9$.

5. Composition selon la revendication 2, dans laquelle la composition contient en outre

e) 4 à 45 % en poids d'huile minérale **ML,** en particulier de l'huile minérale naphténique.

6. Composition selon l'une des revendications précédentes, dans laquelle les fibres de plante **PF** ont une fraction de cellulose supérieure à 30 % en poids, en particulier plus de 40 % en poids, par rapport au poids total des fibres de plante **PF.**

7. Composition selon l'une des revendications précédentes, dans laquelle les fibres de plante **PF** ont un rapport de longueur des fibres de plante au diamètre des fibres de plante compris entre 3:1 et 20:1, en particulier 5:1 à 10:1.

8. Composition selon l'une des revendications précédentes, dans laquelle la polyoléfine **P** a un point de ramollissement, mesuré selon la méthode bille et anneau selon la DIN EN 1238, comprise entre 70 et 170 °C, en particulier entre 80 et 120 °C, de préférence entre 90 et 110 °C.

9. Composition selon l'une des revendications précédentes, dans laquelle la polyoléfine **P** est une poly-$\alpha$-oléfine thermoplastique, de préférence une poly-$\alpha$-oléfine atactique (APAO).

10. Composition selon l'une des revendications précédentes, dans laquelle le rapport de pourcentage en poids, basé sur la composition, du copolymère à blocs de styrène modifié polaire **PS** aux fibres de plante **PF** est compris entre 0,01 et 0,5, en particulier entre 0,05 et 0,1.

11. Procédé de production d'un article tridimensionnel, comprenant les étapes suivantes

(I) Préparer une composition selon l'une des revendications 1 à 10 ;
(II) Former la composition, en particulier par extrusion ou par calandrage, en un article tridimensionnel.

12. Article tridimensionnel obtenu par extrusion et/ou calandrage d'une composition conforme à l'une des revendications 1 à 10.

13. Article tridimensionnel selon la revendication 12 sous la forme d'une membrane, en particulier une membrane de toiture, avec une épaisseur de 1 à 2,5 mm.

14. Emploi d'un article tridimensionnel selon l'une des revendications 12 ou 13 pour des substrats d'étanchéité, en particulier pour des toits d'étanchéité.

**EP 2 596 063 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2002081924 A
- DE 1795547
- DE 202004015936 U1
- US 4659754 A
- US 2010130670 A